Europäisches Patentamt

European Patent Office

Office européen des brevets

(11) Veröffentlichungsnummer: **0 185 885 B1**

(12) **EUROPÄISCHE PATENTSCHRIFT**

(45) Veröffentlichungstag der Patentschrift: **15.07.92**

(21) Anmeldenummer: **85113577.2**

(22) Anmeldetag: **25.10.85**

(51) Int. Cl.⁵: **G02B 6/44**

(54) **Lichtwellenleiterkabel.**

(30) Priorität: **22.12.84 DE 3447057**

(43) Veröffentlichungstag der Anmeldung:
**02.07.86 Patentblatt 86/27**

(45) Bekanntmachung des Hinweises auf die
Patenterteilung:
**15.07.92 Patentblatt 92/29**

(84) Benannte Vertragsstaaten:
**AT BE CH DE FR GB IT LI NL SE**

(56) Entgegenhaltungen:
**EP-A- 42 996          EP-A- 0 139 166**
**DE-A- 2 948 896          FR-A- 2 505 057**
**FR-A- 2 525 349          US-A- 4 188 088**

**Kao: Optical Fibers, Chapter 4**

(73) Patentinhaber: **AEG KABEL Aktiengesellschaft**
**Bonnenbroicher Strasse 2-14**
**W-4050 Mönchengladbach 2(DE)**

(72) Erfinder: **Zamzow, Peter, Dipl.-Ing.**
**Erlenstrasse 9**
**W-4630 Bochum(DE)**
Erfinder: **Nothofer, Klaus, Dipl.-Ing.**
**Urdenbacher Dorfstrasse 13**
**W-4000 Düsseldorf 13(DE)**
Erfinder: **von Wienskowski, Jürgen, Dr.**
**Nespelerstrasse 98**
**W-4050 Mönchengladbach 1(DE)**

(74) Vertreter: **Vogl, Leo, Dipl.-Ing.**
**AEG Aktiengesellschaft Patent-und Lizenz-**
**wesen Theodor-Stern-Kai 1**
**W-6000 Frankfurt am Main 70(DE)**

## Beschreibung

Die Erfindung betrifft ein Lichtwellenleiterkabel mit Zugentlastung. Lichtwellenleiter werden für die breitbandige Übertragung von Nachrichten zunehmend Bedeutung gewinnen. Eine Hauptaufgabe der Kabelkonstruktion ist, die Faser vor mechanischen Belastungen so zu schützen, daß unter keinen Umständen Dämpfungserhöhungen auftreten können. Entsprechend den Anforderungen an die Zugbelastbarkeit muß ein dementsprechend hoher Aufwand für die Zugentlastung getrieben werden. Zur Zeit ist die Zugentlastung als Kostenfaktor noch relativ unbedeutend; wenn jedoch in Zukunft durch wirtschaftliche Großserienfertigung die Herstellungskosten eines Lichtwellenleiters gesenkt werden können, wird dieser Faktor relativ immer stärker in Erscheinung treten.

Es sind Zugentlastungselemente bekannt, die entweder aus Glasfasern oder aus Kunststoffasern hoher Festigkeit bestehen. Stahlseile als Zugentlastung scheiden aus, da man großen Wert auf metallfreie Kabel legt. Bei einem gegebenen Kabelquerschnitt ist es nun nicht immer möglich, die geforderte Zugfestigkeit nur mit Hilfe von Glasfasern zu erreichen. Eine bekannte Maßnahme ist in diesem Falle die Verwendung von Fasern aus hocharaomatischem Polyamid (Aramid). Bisher wurde stets der gesamte Querschnitt mit Zugentlastungselementen einer Art aufgebaut. Das hatte den Nachteil, daß man entweder die Zugentlastung überdimensionierte oder aber die verbleibenden Räume nicht für die Zugentlastung nutzen konnte.

Ein optisches Nachrichtenkabel ist zum Beispiel aus EP-A-42 996 bekannt.

Der Erfindung liegt die Aufgabe zugrunde, ein Lichtwellenleiterkabel mit Zugentlastung zu entwikkeln, das einerseits den im Kabel zur Verfügung stehenden Raum optimal für die Zugentlastung ausnutzt und andererseits ein Minimum bezüglich der Materialkosten verwirklicht.

Diese Aufgabe wird erfindungsgemäß durch die Merkmale des Anspruchs 1 gelöst. Weiterbildungen der Erfindung sind in den Unteransprüchen 2 bis 13 gekennzeichnet.

Für eine gegebene Zugbelastung des Kabels und einen gegebenen Querschnitt für die Zugentlastungselemente ergibt sich aus den Zugfestigkeiten von Glas und dem verwendeten Kunststoffmaterial, vorzugsweise Aramid, ein bestimmtes Mischungsverhältnis von Glas und Kunststoff. Ein solches Verbundkabel ist nicht nur wegen der Kosteneinsparung vorteilhaft, sondern verfügt auch über Notlaufeigenschaften im Brandfall, da der Glasfaseranteil nicht schmilzt oder verbrennt und eine minimale Sicherheits-Zugentlastung sicherstellt.

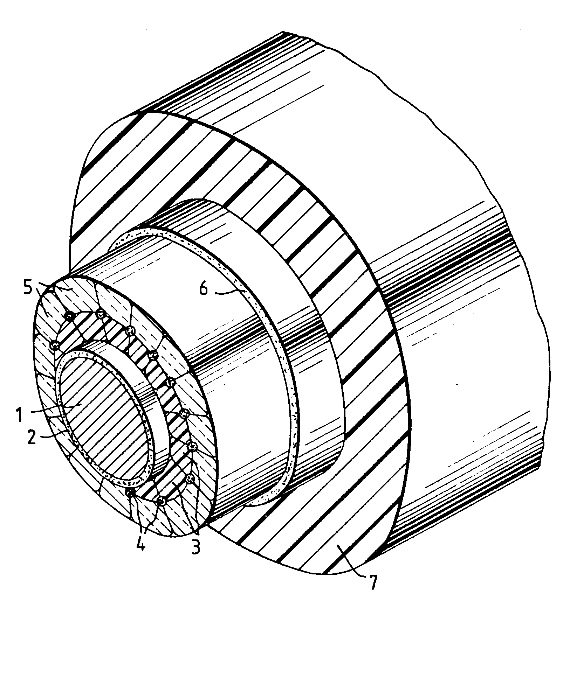

Ein Ausführungsbeispiel der Erfindung wird anhand der Zeichnung erläutert. Die Figur zeigt ein konzentrisch aufgebautes Kabel aus einer Seele 1, welche die Lichtwellenleiter-Verseilelemente enthält. Die Seele ist von einer Folie 2 umgeben, welche im Wesentlichen längs der Kabelseele verläuft. Nach Außen schließt sich eine geschlossene Hülle aus Zugentlastungsbündeln an. Eine innere Lage besteht aus Kunststoffaserbündeln 3. Die äußeren Lagen sind mit Glasfaserbündeln 5 ausgefüllt. Jedes dieser Faserbündel ist mit einem Kleber, vorzugsweise Schmelzkleber, getränkt und verklebt.

Dadurch wird eine große Festigkeit des Kabels erreicht. Der Anteil der Glasfasern an der gesamten Zugentlastung ergibt sich daraus, daß für eine bestimmte Zugfestigkeit und einen vorgegebenen Querschnitt möglichst der gesamte Querschnitt ausgefüllt wird und möglichst viel Glasfasern Verwendung finden sollen. Daraus ergibt sich eindeutig das Verhältnis Glasfaser zur Kunststoffaser bzw. Kunststoffolie. Eine besonders hohe Zugfestigkeit erzielt man mit Karbonfiberbündeln 4.

In einem weiteren vorteilhaften Kabel nach der Erfindung könnten die Kunststoffasern ganz oder teilweise durch Kunststoffolien ersetzt werden. Es ist ohnehin nötig, eine Wasserdampfsperrfolie 6 vorzusehen, die verhindert, daß Wasserdampf eindiffundiert und schließlich in den Lichtwellenleiter eine erhöhte Dämpfung bewirkt. Deshalb ist es nach der Erfindung vorteilhaft, im Außenbereich einen Mantel aus zugfesten Folien aus den Materialien Aramid oder Polyester vorzusehen. Erst dann wird man den Mantel 7, beispielsweise aus Polyethylen, extrudieren. Durch die Verklebung der einzelnen Fasern im Bündel und der Bündel untereinander durch Schmelzkleber oder einen Reaktionskleber wird eine genügende Steifigkeit und Festigkeit des Lichtwellenleiterkabels erzielt. Diese ist wünschenswert, damit die empfindlichen Lichtwellenleiter im Innern genügend geschützt sind. In der in der Figur dargestellten Anordnung sind absichtlich die Zugentlastungselemente weit außen angebracht, damit das Kabel beim Einziehen mittels eines Ziehstrumpfs an der Außenhülle eingezogen werden kann. Selbstverständlich kann man die Zugentlastungselemente auch in der Seele anordnen.

Eine weitere Verfeinerung des Prinzips der Kostenminimierung durch verschiedene Materialien wird durch Einbau von Karbonfibern erreicht.

Seien die auf Einheitsquerschnitt bezogenen Kosten von Karbonfibern Glasfasern und Aramidelementen A, B, und C und die Zugfestigkeiten a, b und c sowie d, e, f die zugehörigen Querschnitte, wobei $Q_Z = d + e + f$ der Querschnitt der gesamten Zugentlastung ist, so gilt für einen optimalen Nutzquerschnitt für die Lichtleiter-Verseilelemente:

$$\frac{Q_Z \cdot (A\,d + B\,e + C\,f)}{Q_L \cdot (a\,d + b\,e + c\,f)} = \text{Min}$$

Für Polyesteranteile wäre ein entsprechender Zusatzterm nötig, der hier vernachlässigt worden ist.

Die Auswertung dieser Gleichung durch einen Rechner oder durch Iteration gibt dem Kabelkonstrukteur die Mittel in die Hand, ein kostengünstiges Kabel mit großem Nutzquerschnitt für die Lichtwellenleiter-Verseilelemente zu schaffen.

**Patentansprüche**

1. Lichtwellenleiterkabel mit einer Kabelseele, einem Kabelmantel, sowie einer konzentrisch zur Kabelseele zwischen dieser und dem Kabelmantel angeordneten Zugentlastung in Form von Zugentlastungselementen aus Bündeln längsorientierter Glasfasern (3) und Kunststoffelementen (4, 5, 6), wobei die Glasfaserbündel mit langem Schlag um die Kabelseele verseilt sind,
   **dadurch gekennzeichnet,**
   dass die Glasfasern bzw. Glasfaserbündel mit Schmelzkleber getränkt sind und dass die Zugentlastungselemente in direktem Kontakt zueinander in einer oder mehreren Lage(n) um die Kabelseele angeordnet und verklebt sind und somit zusammen einen gemeinsamen kompakten inneren separaten Mantel bilden, der die Seele und darin befindliche Lichtwellenleiter konzentrisch umschliesst und unterhalb des Aussenmantels angeordnet ist.

2. Lichtwellenleiterkabel nach Anspruch 1,
   **dadurch gekennzeichnet,**
   dass die zugentlastenden Kunststoffelemente in Form von Fasern und/oder Folie vorliegen.

3. Lichtwellenleiterkabel nach Anspruch 1 oder 2,
   **dadurch gekennzeichnet,**
   dass der Volumenanteil der Glasfasern an den Zugentlastungselementen mindestens 10 % beträgt.

4. Lichtwellenleiterkabel nach einem der Ansprüche 1 bis 3,
   **dadurch gekennzeichnet,**
   dass für die Kunststoffelemente ein Material mit hoher Zugfestigkeit, vorzugsweise aromatisches Polyamid, vorgesehen ist.

5. Lichtwellenleiterkabel nach einem der Ansprüche 1 bis 3,
   **dadurch gekennzeichnet,**
   dass für die Kunststoffelemente als Material mit hoher Zugfestigkeit Polyester vorgesehen ist.

6. Lichtwellenleiterkabel nach einem der Ansprüche 1 bis 5,
   **dadurch gekennzeichnet,**
   dass als Zugentlastungselemente zusätzlich Karbonfibern vorgesehen sind.

7. Lichtwellenleiterkabel nach einem der Ansprüche 1 bis 6,
   **dadurch gekennzeichnet,**
   dass die Kunststoff- bzw. Glasfasern in einer gemeinsamen Lage sektorförmig angeordnet sind.

**Claims**

1. Optical-fibre cable with a cable core, a cable sheath and a strain relief device arranged concentrically to the cable core between the latter and the cable sheath in the form of strain relief elements of bundles of longitudinally oriented glass fibres (3) and plastic elements (4, 5, 6), the glass fibre bundles being stranded around the cable core with a long lay, characterized in that the glass fibres or glass fibre bundles are impregnated with a hot-melt-type adhesive and that the strain relief elements are arranged in direct contact with one another in one or more layers around the cable core and glued together and thus form a common, compact, inner, separate sheath, which encloses the core and the optical fibres located therein concentrically and is arranged beneath the outer sheath.

2. Optical-fibre cable according to claim 1, characterized in that the strain-relieving plastic elements are in the form of fibres and/or film.

3. Optical-fibre cable according to claim 1 or 2, characterized in that the volume proportion of glass fibres in the strain relief elements is at least 10 %.

4. Optical-fibre cable according to any one of claims 1 to 3, characterized in that a material with high tensile strength, preferably aromatic polyamide, is provided for the plastic elements.

5. Optical-fibre cable according to any one of claims 1 to 3, characterized in that polyester is provided as a material with high tensile strength for the plastic elements.

6. Optical-fibre cable according to any one of claims 1 to 5, characterized in that carbon fibres are provided additionally as strain relief elements.

7. Optical-fibre cable according to any one of claims 1 to 6, characterized in that the plastic or glass fibres are arranged in a sector pattern in a common layer.

**Revendications**

1. Câble à guides d'ondes lumineuses, comportant une âme, une enveloppe et, concentriquement à l'âme, entre celle-ci et l'enveloppe, un soulagement de traction sous forme d'éléments de soulagement de traction constitués par des faisceaux de fibres de verre (3) orientées longitudinalement et d'éléments de matière plastique (4, 5, 6), les faisceaux de fibres de verre étant câblés autour de l'âme du câble avec un pas long,
caractérisé
par le fait que les fibres de verre et/ou le faisceau de fibres de verre sont imprégnés d'adhésif fondu et par le fait que les éléments de soulagement de traction, en contact mutuel direct, sont disposés et collés en une ou plusieurs couches autour de l'âme du câble et forment ainsi ensemble une enveloppe commune intérieure, séparée et compacte, qui entoure concentriquement l'âme et les guides d'ondes lumineuses s'y trouvant et qui est située en dessous de l'enveloppe extérieure.

2. Câble à guides d'ondes lumineuses selon revendication 1,
caractérisé
par le fait que les éléments en matière plastique, soulageant la traction, sont présents sous forme de fibres et/ou de feuille.

3. Câble à guides d'ondes lumineuses selon revendication 1 ou 2,
caractérisé
par le fait que la participation en volume des fibres de verre aux éléments de soulagement de traction vaut au moins 10 %.

4. Câble à guides d'ondes lumineuses selon l'une des revendications 1 à 3,
caractérisé
par le fait qu'il est prévu pour les éléments en matière plastique une matière à plus grande résistance à la traction, de préférence un polyamide aromatique.

5. Câble à guides d'ondes lumineuses, selon l'une des revendications 1 à 3,
caractérisé
par le fait qu'un polyester est prévu comme matière à grande résistance à la traction, pour les éléments en matière plastique.

6. Câble à guides d'ondes lumineuses selon l'une des revendications 1 à 5,
caractérisé
par le fait que des fibres de carbone sont prévues en plus en tant qu'éléments de soulagement de traction.

7. Câble à guides d'ondes lumineuses selon l'une des revendications 1 à 6,
caractérisé
par le fait que les fibres de matière plastique et/ou de verre sont disposées par secteurs, dans une couche commune.